(19) Europäisches Patentamt

European Patent Office

Office européen des brevets

(11) EP 0 742 354 A1

(12) **EUROPEAN PATENT APPLICATION**

(43) Date of publication:
13.11.1996 Bulletin 1996/46

(51) Int. Cl.⁶: **F02B 61/04**, F02M 69/10

(21) Application number: 96107610.6

(22) Date of filing: 13.05.1996

(84) Designated Contracting States:
**DE FR GB IT**

(30) Priority: 31.05.1995 JP 157160/95
19.05.1995 JP 145318/95
12.05.1995 JP 138511/95

(71) Applicant: **YAMAHA HATSUDOKı KABUSHIKı KAISHA**
**Iwata-shi Shizuoka-ken, 438 (JP)**

(72) Inventors:
• **Suzuki, Takahiro**
**Iwata-shi, Shizuoka Ken, 438 (JP)**
• **Yoshida, Takeo**
**Iwata-shi, Shizuoka Ken, 438 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Internal combustion engine**

(57)    An internal combustion engine of a two stroke cycle type comprises at least one cylinder body a top end of which is covered by a cylinder head. Said cylinder body accommodates a slidingly reciprocable piston. At least one fuel injector is provided being capable to inject fuel with a velocity of 10 m/s to 30 m/s.

Fig. 1

EP 0 742 354 A1

## Description

This invention relates to an internal combustion engine of a two-stroke cycle type comprising at least one cylinder body a top end of which being covered by a cylinder head, said cylinder body accommodating a slidingly reciprocatable piston and at least one fuel injector.

Internal combustion engines of a fuel injection type include one in which a combustion chamber is formed with a cylinder head, a cylinder body, and a piston, a scavenging port and an exhaust port are formed in the cylinder body, an injector is mounted on a cylinder body side wall, and fuel is injected from the injector to the combustion chamber.

For instance, Tokuhyou Hei 6-508670 discloses a two stroke cycle ignition engine. The above patent discloses an arrangement in which an injector is disposed at a position opposite the exhaust port, the injection flow is directed to the exhaust port, and the injection period is from when the exhaust port is partially uncovered to when the exhaust port is completely covered. The above patent also discloses an arrangement in which the injection is started upon the exhaust port being covered at low speeds.

In such fuel injection internal combustion engines, at high speeds, namely when the piston speed is high, more injection amount is required than at low speeds. Therefore, the fuel amount may be insufficient if the injection is stopped before the exhaust port is closed. Furthermore, if injection is made when the exhaust port is almost closed at low speed, even if a small amount of fuel suffices, the fuel amount may still be insufficient. Therefore, plural number of injectors have to be employed.

Although four-stroke cycle engines usually have no exhaust port with respect to the fuel amounts basically the same applies to these engines as to the above mentioned two-stroke cycle engines.

Accordingly, it is an objective of the present invention to provide an improved internal combustion engine as indicated above which always ensures the injection of sufficient fuel amounts during all load ranges of the engine and simultaneously as compact light-weight and minimises the amount of required fuel injectors.

According to the present invention this objective is solved for an internal combustion engine as indicated above in that said fuel injector is capable to inject fuel with a velocity of 10m/sec to 30m/sec.

According to an advantageous embodiment of the invention said piston comprises at least one ring groove for accommodating at least one piston ring whereby said fuel injector is located within a cylinder side wall at a first distance A to said top end of said cylinder body, whereby the following inequation is fulfilled: $RS < A < 0.3L$, whereby RS is a second distance between said top end of said cylinder body and the lower end of said ring groove of said piston when it is at the top dead centre position and L is a third distance between said top end of said cylinder body and the top circumference of said piston when it is in the bottom dead centre position.

The operation of said injector may be further enhanced by an engine control device for controlling said injector on the basis of detected engine operating conditions, which may be one or a combination of a crank angle, a crankcase inside pressure, a cylinder inside pressure, knocking of the engine, intake air temperature, a throttle opening, an intake pressure, a cylinder temperature, an atmospheric pressure, a coolant temperature and an engine speed.

If said engine is a two-stroke cylinder internal combustion engine comprising at least one exhaust port and at least one scavenging port opposing each other it is advantageous that a fourth distance ES between said top end of said cylinder body and said exhaust port fulfils the following inequation:

$$0.35 \, ES < A < 0.65 \, ES.$$

In that case it is advantageous when said engine control device is adapted to control the operation of said injectors such that at high engine speeds said injector starts fuel injection after said exhaust port if uncovered as said piston descends, and stops fuel injection when said piston has moved corresponding to a specified crank angle after said exhaust port is covered with said piston when it ascends.

Although it is sufficient to provide each cylinder body with one injector further enhanced results may be achieved by providing a second injector for each of said cylinder bodies.

According to another advantageous embodiment said injector comprises a cap body fitted on the exterior side of an injector housing, a core provided with a coil within said housing, a needle housing fitted to the interior side of said housing, and a nozzle at the interior side of said housing having an injection passage leading to respective injection holes.

Therefore, according to one of the embodiments of the invention at high speeds, the injector starts injection after the exhaust port is uncovered as the piston descends, and stops when the piston has moved for a specified crank angle after the exhaust port is covered with the piston as the piston ascends, and at low speeds, the injector starts injection at a time point which is after the piston starts ascending from the bottom dead centre and before the exhaust port is covered, and stops when the piston has moved for a specified crank angle after the exhaust port is covered with the piston as the piston further ascends. Thus, required amount of fuel may be supplied with a small number of injectors at both high and low speeds.

Further fuel injection is stopped at a crank angle which is between the crank angle at which the exhaust port is covered with the piston and the crank angle at which the injector is completely covered, or at an angle before the injector is completely covered. Such an angle may be used as a simple and secure reference for stopping the injection.

In the following the present invention is explained in greater detail by means of several embodiments thereof in conjunction with the accompanying drawings, wherein:

Fig. 1 shows schematically an embodiment of a fuel injection internal combustion engine in an outboard motor, mainly showing one cylinder;
Fig. 2 is a flow chart for fuel and air for the cylinder side wall injection;
Fig. 3 shows a vertical cross section of an upper part of one cylinder of a fuel injection internal combustion engine;
Fig. 4 shows a horizontal cross section of a fuel injection internal combustion engine;
Fig. 5 shows a cross section of an exhaust system;
Fig. 6 is a plan view of a fuel injection internal combustion engine;
Fig. 7 shows schematically an embodiment of a fuel injection internal combustion engine in a motorcycle;
Fig. 8 shows a vertical cross section of a fuel injection internal combustion engine in a motorcycle;
Fig. 9 is a back view of a fuel injection internal combustion engine in a motorcycle;
Fig. 10 is a flow chart for fuel and air for the cylinder side wall injection;
Fig. 11 shows a horizontal cross section similar to FIG. 4 of a fuel injection internal combustion engine having two injectors per cylinder;
Fig. 12 is a back view similar to FIG. 9 of a fuel injection internal combustion engine in a motorcycle;
Fig. 13 shows a cross section of an injector;
Fig. 14 shows a cross section of the tip portion of an injector;
Fig. 15 is a fuel injection timing chart; and
Fig. 16 show schematic cross sections of fuel injection from the injector;
Fig. 17 shows a schematic plan view of fuel injection from the injector;
Fig. 18 shows position and size of the injection holes of the injector;
Fig. 19 shows a schematic cross section of fuel injection from the injector of another embodiment having two injectors per cylinder;
Fig. 20 is a timing chart showing the voltage applied to the injector, needle lift amount and pressure; and

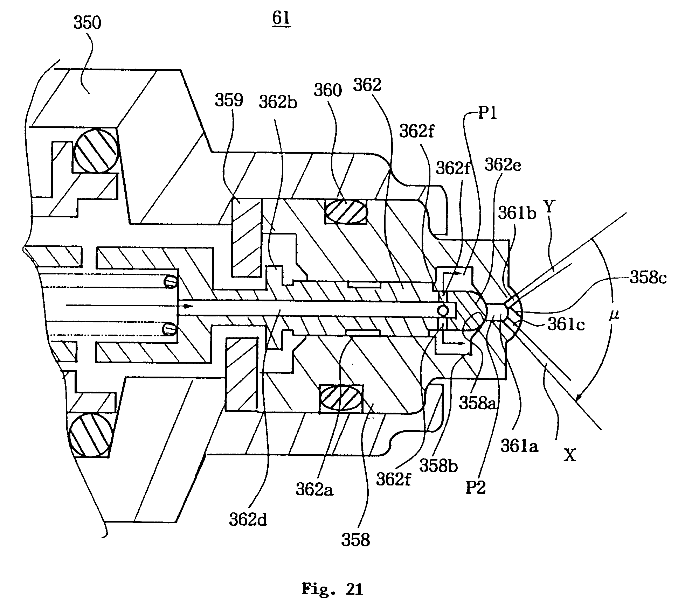

Fig. 21 shows a schematic cross section of fuel injection from the injector of another embodiment.

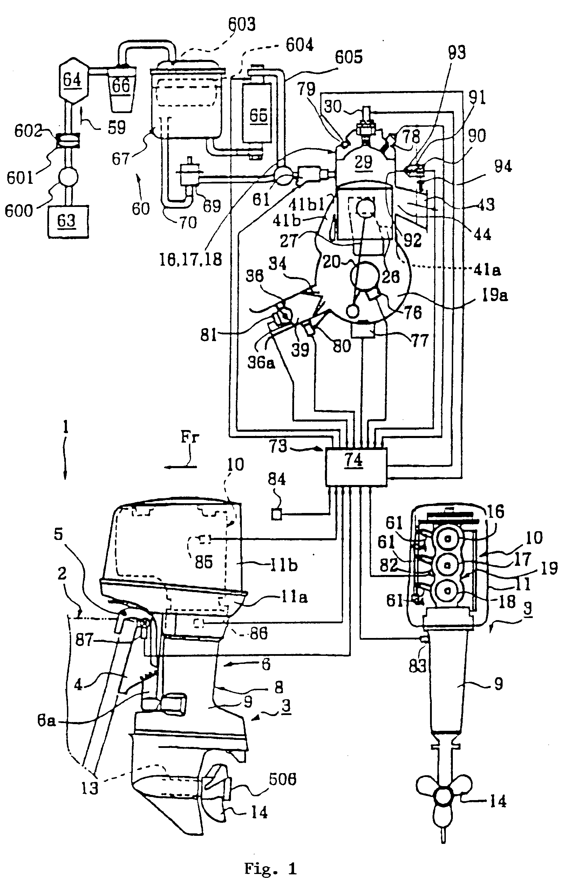

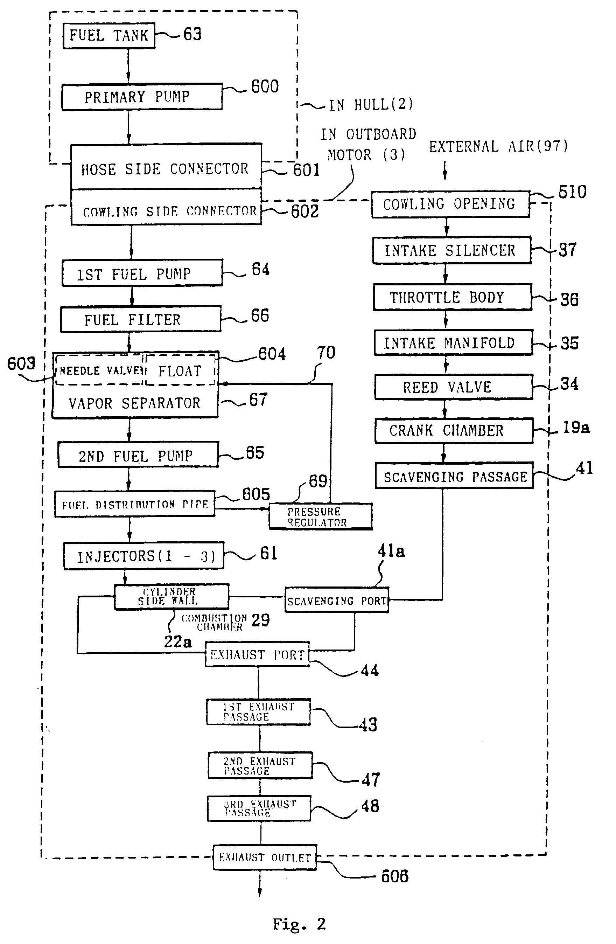

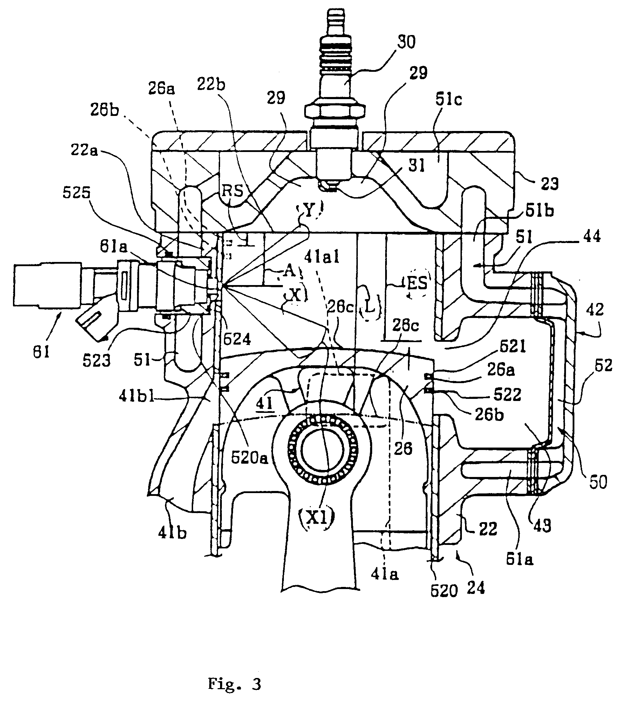

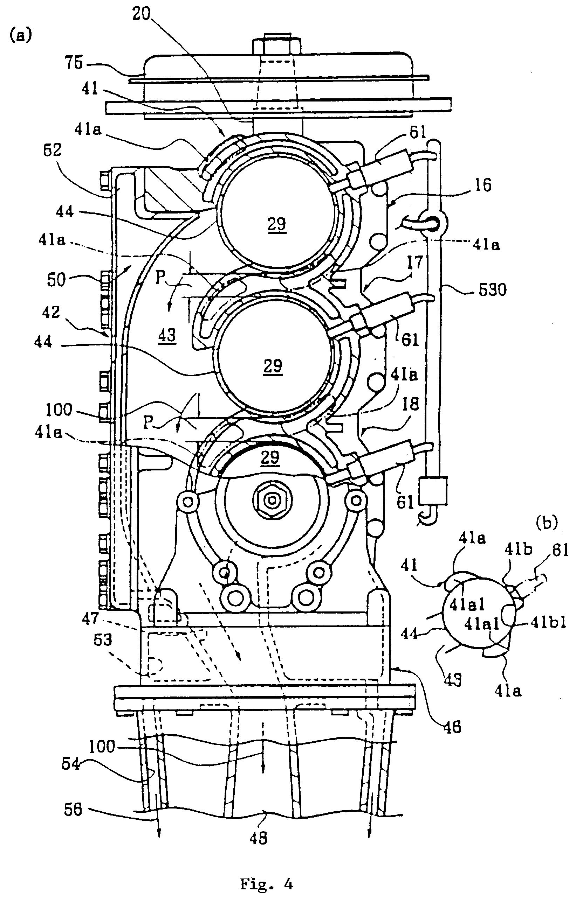

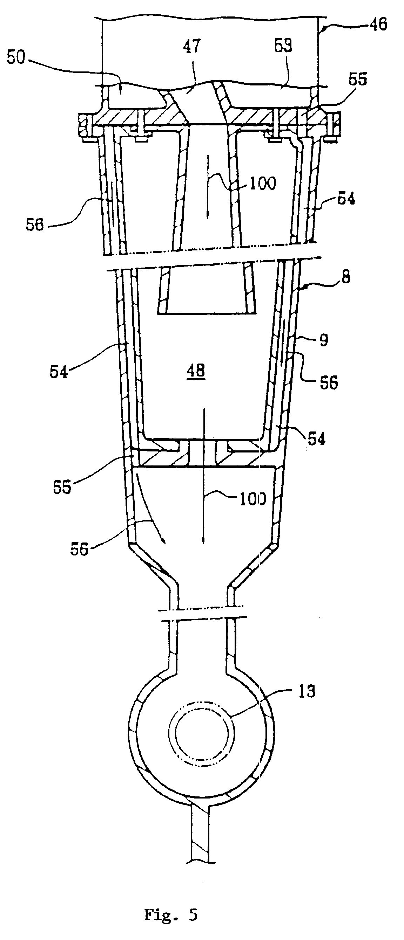

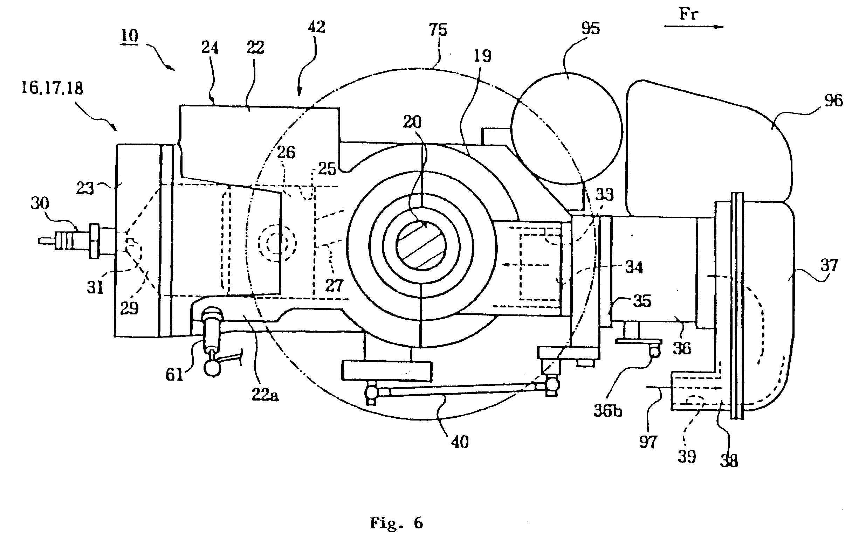

The internal combustion engine of a fuel injection type of this invention will be hereinafter described in reference to the appended drawings. FIG. 1 is a schematic drawing, mainly for one cylinder, of an internal combustion engine of a fuel injection type as an embodiment mounted on an outboard motor. FIG. 2 is a flow chart for fuel and air injected from a cylinder side wall. FIG. 3 shows a cross section of an upper part of a cylinder of the fuel injection type internal combustion engine. FIG. 4 shows a horizontal cross section of the fuel injection type internal combustion engine. FIG. 5 is a cross-sectional view showing an exhaust system. FIG. 6 is a plan view of the fuel injection type internal combustion engine.

FIG. 1 shows a vessel 1 as a vehicle with the arrow Fr showing the direction of advancing. The words right and left used later herein mean the directions as seen in the advancing direction described above. The vessel 1 has a hull 2 with its stern mounted with a detachable outboard motor 3. The outboard motor 3 comprises a bracket 4 mounted on the stern, and an outboard motor proper 6 pivoted with a pivot shaft 5 (arranged in the direction normal to the Fr direction) relative to the bracket 4. The outboard motor proper 6 is provided with a power transmission device 8 which in turn comprises a transmission case 9 constituting the outer shell of the power transmission device 8 and a transmission mechanism housed in the transmission case 9. The transmission case 9 is pivoted for swinging about a vertical pivot shaft (not shown) provided generally vertically on a swivel bracket 6a which constituted the outboard motor proper 6 pivoted with the pivot shaft 5 relative to the bracket 4. The outboard motor proper 6 is also provided with a two cycle engine 10 of a fuel injection type. The engine 10 is detachably mounted on the top end of the transmission case 9 with its under side covered with a cover 11a and its upper side covered with a cover 11b which can be opened and closed as required. The transmission case 9 extends downward into the water. At the lower end of the transmission case 9 is supported a shaft (not shown) extending horizontally and a propeller 14 is mounted on the shaft. The propeller 14 is connected through the transmission mechanism of the power transmission device 8 for interlocked movement with the engine 10. An exhaust passage 13 sends exhaust gas to the propeller 14.

The engine 10 comprises three cylinders; the first cylinder 16, the second cylinder 17, and the third cylinder 18, stacked one over another. The cylinders 16, 17, 18 of the engine 10 has a common crankcase 19 and a cylinder body 22. A crankshaft 20 with its axis generally vertically directed is housed in the area where the crankcase 19 and the cylinder body 22 are joined together, and supported for free rotation about its axis relative to the crankcase 19 and the cylinder body 22. Cylinder bodies 22 of the cylinders 16,17,18 are attached to the rear of the crankcase 9 to form a single unit. Projecting ends of the cylinder bodies 22 are respectively provided with detachable cylinder heads 23. The cylinder bodies 22 are joined together to constitute a cylinder block 24, and the cylinder heads 23 are also joined together.

Each of the cylinder bodies 22 has a cylinder bore 25 into which a piston 26 is inserted for free sliding back and forth. Each piston 269 is connected through a connecting rod 27 to the crankshaft 20. The space surrounded with the cylinder head 23 and the piston 26 in the cylinder bore 25 corresponds to the "cylinder inside" which becomes a combustion chamber 29 when the piston 26 approaches the cylinder head 23 to a certain extent. Each of the cylinder heads 23 is provided with an ignition plug 30, corresponding to each combustion chamber 29, with its discharging portion 31 facing the combustion chamber 29. For each cylinder, a crank chamber 19a is formed with the cylinder block 24 and the crankcase 19.

On the front side of the crankcase 19 are formed three intake ports 33 each connected to each crank chamber 19a and each provided with a reed valve 34. In front of the reed valve 34 are connected an intake manifold 35, a throttle body 36 housing a throttle valve 36a, and an intake silencer 37 in succession in that order. The top end of the intake silencer 37 is provided with an inlet duct 38 opening to the rear so as to take in air from a cowling opening 510. The inlet duct 38, intake silencer 37, throttle body 36, intake manifold 35, and reed valve 34 are connected to each other through intake passages 39 formed respectively in those components. The intake passages 39 are connected to the intake port 33. Throttle levers 36b provided respectively on the throttle bodies 36 are connected together with interlocking means 40 so that the throttle valves 36a are interlocked to perform opening and closing movements together with the throttle levers 36b when an operating mechanism is operated by an operator.

Each cylinder body 22 around the cylinder bore 25 is provided with a scavenging passage 41. The scavenging passage 41 is constituted with two main scavenging passages 41a each having a scavenging port 41a1 opening to the cylinder bore 25 and a sub-scavenging passage 41b having a scavenging port 41b1. The scavenging ports 41a1 are located at opposing positions, and an exhaust port 41b1 of the exhaust passage 41b is located to oppose an exhaust port 44. These exhaust passages 41 make internal connections between the crankcase 19 and the combustion chamber 29.

To the left side of the cylinder block 24 is attached an exhaust manifold 42. One end of a first exhaust passage 43 in the exhaust manifold 42 is branched into three parts each opening through each exhaust port 44 to each combustion chamber 29. An exhaust guide 46 is interposed between the cylinder block 24 and the transmission case 9. A second exhaust passage 47 of the exhaust guide 46 is connected to the other end of the first exhaust passage 43. A third exhaust passage 48 is formed in the transmission case 9. One end of the third exhaust passage 48 is connected to the second exhaust passage 47 and the other end of the third exhaust passage 48 is a cylindrical exhaust passage 13 connected to an exhaust passage in the propeller 14. The end of the exhaust passage is open as a discharge port 506 into the water.

The engine 10 is provided with a cooling device 50 of a water-cooled type. The cooling device 50 comprises a first water cooling jacket 51 formed for the cylinder head 23 and the cylinder block 24, a second cooling water jacket 52 formed for the exhaust manifold 42, a third cooling water jacket 53 formed for the exhaust guide 46 so as to surround the second exhaust passage 47, and a fourth cooling water jacket 54 formed for the transmission case 9 so as to surround the third exhaust passage 48, and those cooling water jackets 51 - 54 are connected to each other either directly or through a plurality of cooling water connection passages 55. The lower end of the fourth cooling water jacket 54 is connected to the downstream side of the third exhaust passage 48.

A water pump is provided for supplying cooling water 56 such as sea water to the first cooling water jacket 51. The cooling water 56 passes through; the outer portion 51a, surrounding the exhaust manifold, of the first cooling water jacket 51; the second cooling water jacket 52; the outer portion 51b, surrounding the upper part of the cylinder, in the first cooling water jacket 51; the cylinder head portion 51c in the first cooling water jacket 51, the cooling water jackets 53, 54, and the downstream end of the third exhaust passage 48, and discharged into the water. As the cooling water flows, the first through third cylinders 16, 17, 18 are cooled.

The engine 10 is provided with a fuel supply device 60 for supplying fuel 59. The fuel supply device 60 has three injectors 61 detachably attached to the cylinder side walls 22a of the cylinder bodies 22 corresponding to the first through third cylinders 16, 17, 18. The injectors 61 inject fuel 59 appropriately from the cylinder wall sides 22a into the combustion chambers 29. Each injector 61 is provided with a first fuel pump 64 and a second fuel pump 65 in series. The first fuel pump 64 is operated by pressure pulsation in the crankcase 19a to draw fuel 59 in a fuel tank 63 in the hull 2, and sends the fuel 59 to a vapor separator 67 which is a fuel storage (small tank) in the outboard motor 3. The second fuel pump 65 pressurizes and supplies fuel 59 at the vapor separator 67.

A primary pump 600 is interposed between the fuel tank 63 and the first fuel pump 64. The primary pump 600 and the first fuel pump 64 are interconnected through a hose side connector 601 and a cowling side connector 602. The primary pump 600 is for manually supplying fuel before starting.

A fuel filter 66 and the vapor separator 67 are interposed in series between the first fuel pump 64 and the second fuel pump 65. In the vapor separator 67 are provided a needle valve 603 and a float 604. When the level of fuel 59 in the vapor separator 67 lowers and the float 604 lowers to a certain level or below, the needle valve 603 opens to supply fuel 59 from the fuel tank 63 side. The second fuel pump 65 supplies fuel 59 through a fuel supply pipe 605 to each injector 61. The fuel supply pipe 605 is provided with a pressure regulator 69 for use in the adjustment of the pressure of fuel 59 supplied to the injector 61. Fuel not injected is returned through a fuel passage 70 to the vapor separator 67 located on the upstream side of the second fuel pump 65. Tiny bubbles of fuel vapor or air mixed in the fuel are separated with the vapor separator 67.

Each injector 61 is of an electromagnetic type, and when it is energized (or de-energized), fuel 59 is injected into the combustion chamber 29 for that period. Of the components of the fuel supply device 60, those from the fuel tank 63 to the hose side connector 601 are located in the hull 2, and others constitute the outboard motor 3.

FIG. 1 shows an engine control device 73 for controlling the engine 10. The engine control device 73 is provided with an electronic control unit 74 and connected electrically to ignition plugs 30 functioning as actuators, the injectors 61, and the second fuel pump 65. A flywheel magneto 75 is attached to the top end of the crankshaft 20 for supplying electric power to the control unit 74 directly or through a battery.

Various sensors for detecting the operating state of the engine 10 are provided and electrically connected to the control unit 74. Such sensors are: a crank angle sensor 76 for detecting a reference crank angle and rotation angle of the crankshaft 20, crankcase inside pressure sensor 77 for detecting the pressure inside the crankcase 19, a cylinder inside pressure sensor 78 for detecting the pressure inside one of the cylinders 16 - 18, a knocking sensor 79 for detecting the state in the cylinders 16 - 18, an intake air temperature sensor 80 for detecting the temperature in the intake passage 39, and a throttle opening sensor 81 for detecting the degree of opening of a throttle body 36. An intake pressure sensor may be also provided for detecting the pressure of the intake passage 39.

There are also provided: a cylinder temperature sensor 82 for detecting the temperature of one cylinder body 22, a back pressure sensor for detecting the pressure on the upstream side in the third exhaust passage 48, an atmospheric pressure sensor 84 for detecting the atmospheric pressure, a cooling water temperature sensor 85 for detecting the temperature of cooling water 56; a shift sensor 86 for detecting forward, neutral, and reverse shifting operations and shifted states of the power transmission device 8; and a trim angle sensor 87 for detecting up and down rotated positions of the outboard motor 3 about the pivot shaft 5.

Each of the cylinders 16 - 18 is also provided with an $O_2$ sensor 90 disposed in a sensor holding chamber 91. When the piston 26 moves down and passes a relief valve hole 92 in the cylinder side wall 22a, a relief valve 93 is opened by exhaust gas pressure, and exhaust gas enters the sensor holding chamber 91. The $O_2$ sensor 90 detects the concentration of $O_2$ in exhaust gas, and according to the detected value, calculates air to fuel ratio in the combustion chamber 29. The exhaust gas in the sensor holder chamber 91 passes through a check valve 94 and is exhausted to the first exhaust passage 43. The engine 10 is also provided with a starter 95 and an oil tank 96.

During operation of the engine 10, when the pistons 26 in the first through third cylinders 16 - 18 move in succession from the bottom dead center on the crankshaft 20 side toward the combustion chamber 29, the pistons 26 cover in succession the scavenging ports 41a1 and 41b1 of the scavenging passage 41 and the exhaust port 44 of the first exhaust passage 43. When the piston 26 moves toward the combustion chamber 29 as described above, the pressure in the crank chamber 19a in the crankcase 19 becomes negative. Then, the pressures on the reed valve 34, the intake passage 39 in the intake port 33, intake manifold 35, throttle body 36, and the intake silencer 37 become negative in succession. As a result, external air 97 is drawn from the intake port 33 into the intake passage 39 and into the crank chamber 19a in the crankcase 19. This process is the "intake stroke".

When the piston 26 further moves toward the combustion chamber 29 after the scavenging ports 41a1 and 41b1 of the scavenging passage 41 and the exhaust port 44 of the first exhaust passage 43 are covered, the mixture already taken in the combustion chamber 29 is compressed. This process is the "compression stroke".

Immediately before the piston 26 reaches the top dead center, the mixture is ignited with an electric discharge of the discharging portion 31 of the ignition plug 30 controlled with the engine control device 73, burns and expands to push back the piston 26 toward the crankshaft 20 when the piston goes beyond the top dead center. This process is the "combustion stroke".

As the piston 26 moves toward the crankshaft 20, the air taken into the crank chamber 19a of the crankcase 19 is pre-compressed. By the way, the reed valve 34 is closed by the pressure prevailing at this time. In the middle of the movement of the piston 26 toward the crankshaft 20, first the exhaust port 44 is uncovered. Then, burned product of the mixture or exhaust gas 100 is discharged through the exhaust port 44. This process is the "exhaust stroke".

The exhaust gas 100 is exhausted through the first exhaust passage 43, second exhaust passage 47, third exhaust passage 48, and exhaust passage 13 into the water. In this case, the cooling water 56 after cooling the cylinders 16 - 18 runs through the fourth cooling water jacket 54 and the cooling water connecting passage 55 and is exhausted together with the exhaust gas 100 into the water described above.

As the piston 26 moves toward the crankshaft 20 and the exhaust port 44 is uncovered, next, the scavenging port 41 is opened. Then, the air taken in and precompressed as described above is made to flow through the scavenging passage 41 into the combustion chamber 29. This intake air pushes out part of the burned gas remaining in the combustion chamber 29 to the first exhaust passage 43. This process is the "scavenging stroke". Since the scavenging stroke begins in the middle of the exhaust stroke, and the exhaust stroke is over in the middle of the scavenging stroke, the two strokes are also called collectively as the scavenging exhaust stroke. After that, the piston 26 returns to the bottom dead center. Fuel is injected from the injector 61 during the period from the middle of the scavenging stroke to the early period of the compression stroke.

In this case, part of the air which has flowed through the scavenging passage 41 into the combustion chamber 29 blows out to the first exhaust passage 43 side, mixes with burned gas and exhausted as the exhaust gas 100. On the other hand, the rest of the burned gas which has not been exhausted mixes with fresh intake. From that state, the piston 26 moves again toward the combustion chamber 29 side, and the steps described above are repeated so that the crankshaft 20 is rotated. By the way, the injection is carried out after the blow out is stopped. Through the crankshaft 20, the engine outputs a power to rotate the propeller 14 through the power transmission device 8 and drive forward the vessel 1 as an object to be driven. The first, second, and third cylinders 16, 17, and 18 work in that order with a phase difference of a crank angle of 120°.

In FIG. 3 the piston 26 is arranged for sliding in a sleeve 520 and formed with a first ring groove 26a and a second ring groove 26b over and under respectively, and with a first piston ring 521 and a second piston ring 522 respectively fit therein. The cylinder side wall 22a is provided the injector 61 through a cap 523. The front and rear sides of the cap 523 are sealed with seal members 524 and 525, respectively. The tip portion 61a of the injector 61 is mounted to face an opening 520a of the sleeve 520 and the mounting position is determined as described below.

The injector 61 is disposed in a half zone in the circumferential direction of the cylinder wall 22a opposite the exhaust port 44 and nearer to the cylinder head 23 than to the exhaust port 44 in the longitudinal direction of the cylinder.

When it is assumed that: the distance between the top end 22b of the cylinder and the mounting position of the injector is A, the distance between the top end 22b of the cylinder and the piston top circumference when the piston is at the bottom dead center is L, and the distance between the top end 22b of the cylinder and the lower end of the first ring groove 26a in which the first piston ring 521 is fit is RS, a relationship holds as $RS < A < 0.3\,L$.

Also, when it is assumed, that the distance between the top end 22b of the cylinder and the exhaust port 44 is ES, a relationship holds as $0.35\,ES < A < 0.65\,ES$.

By mounting the injector 61 to a specified position as described above, a longer zone in which injection is possible may be secured in comparison with the conventional arrangement while lowering heat load on the injector by the piston 26 at an early period of the combustion stroke.

Two, upper and lower fuel injections are made from the injector 61 with the downward directed injection flow X directed to the piston head 26c which is moving up from the bottom dead center to the top dead center, and with the upward directed injection flow Y directed to the ignition plug 30.

The piston head 26c is provided with a recess 26d as an injection flow guide portion for directing part of the injection flow X after striking the piston head 26c being reflected from the piston head 26c toward the upper part of the cylinder. As the injection flow X form the injector 61 strikes the piston head 26c, and is reflected by the piston head 26c, the piston head 26c is cooled and heat is exchanged to accelerated vaporization. Since part of fuel is directed by the injection flow guide portion 26d toward the upper part of the cylinder, thick mixture is produced not only near the piston head 26c but also in the upper part of the cylinder so that smooth combustion is made possible.

If there is the injection flow X only, mixture will become rich near the piston head 26c and thin in the upper part of the combustion chamber. However, the injection flow guide portion 26d tends to make mixture uniform over the entire combustion chamber 29 as much as possible and therefore smooth combustion is possible. The upward directed injection flow Y also has an effect of making mixture uniform over the entire combustion chamber 29 and therefore smooth combustion is possible.

At the time of starting or when the load is low, the piston temperature is low, the throttle valve opening is small and the gas flow in the cylinder is less active. Therefore, mixture cannot be made uniform across the entire combustion chamber 29 with only one of the injection flows X and Y. However, since mixture is made uniform by the two injection flows X and Y, smoother combustion is possible.

Furthermore, since combustible mixture is securely formed by the upward directed injection flow around the ignition plug 30 at the time of starting, ease of starting is improved.

The injection velocity from the injector 61 into the combustion chamber 29 is set at 10 m/s - 30 m/s. That is to say, the flow velocity of the injection flows X and Y are set at 10 m/s - 30 m/s. The so-called penetrating force of the injection flows X and Y are set at a low value within the range required for the diffusion of fuel, and the fuel pressure is set at a low value.

The fuel pressure in the upstream part of the injection hole when fuel is injected from the injector 61 into the combustion chamber 29 is set at 300 kPa - 1000 kPa.

By setting the injection velocity from the injector 61 into the combustion chamber 29 at 10 m/s - 30 m/s, sufficient period of time after is secured for fuel to reach the piston top 26c, and vaporization of fuel is accelerated. Furthermore, fuel is preventing from finding its way into the exhaust port 44 even if fuel is injected prematurely.

Furthermore, since the injection flow X speed directed to the piston head 26c is not so low as the injection flow is disturbed with tandem flow produced in the cylinder by the scavenging flow, heat exchange at the piston head 26c is possible, and vaporization of injected fuel is more accelerated.

The fuel pressure in the upstream part of the injection hole when fuel is injected from the injector 61 into the combustion chamber 29 is set at 300 kPa - 1000 kPa. With that pressure, it is possible to make the injection speed 10 m/s - 30 m/s.

The injector 61 is located nearer to the cylinder head 23 than to the sub-scavenging port 41b1. The downward directed injection flow X is directed to the exhaust port 44 or the piston head 26c and securely strikes the piston head 26c after the exhaust port 44 is covered with the piston 26 and heat exchange occurs at the piston head 26c.

Injection start timing is set so that the exhaust port 44 is covered before the tip of the downward directed injection flow X reaches the exhaust port 44. The tip of the downward directed injection flow X is shown as X1. In the case all the downward directed injection flow X is made to strike the piston head 26c, the injection start timing is set so that the exhaust port 44 is covered before the tip of rebounded injection flow reaches the exhaust port 44.

As described above, the injector 61 is located according to this invention nearer to the cylinder head 23 than according to the conventional arrangement. As a result, the injection flow travels a longer distance. During the travel, fuel exchanges heat with heated atmosphere in the combustion chamber also before reaching the piston head 26c.

As shown in FIG. 4, the fuel distribution pipe 530 connected to the injectors 61 is disposed parallel to the plane connecting the axes of plural number of cylinders to each other. In each of the three cylinders 16 - 18, the injector 61 is located in the same position.

Alternatively, the lower is the cylinder position, the lower (nearer to the crank) may be arranged the position of the injector. The lower is the injector position, the greater is the heat load, so that the injector 61 is covered for a longer period of time during the combustion stroke. On the other hand, at least for the topmost cylinder 16, the injector 61 is arranged with dimensional relationships of $RS < A < 0.3 L$ and $0.35 ES < A < 0.65 ES$.

The direction of connecting the sub-scavenging port 41b1 to the exhaust port 44 is tilted. The injector 61 is also tilted. As a result, the cylinder pitch P may be shortened while avoiding interference between adjacent main scavenging ports 41a1.

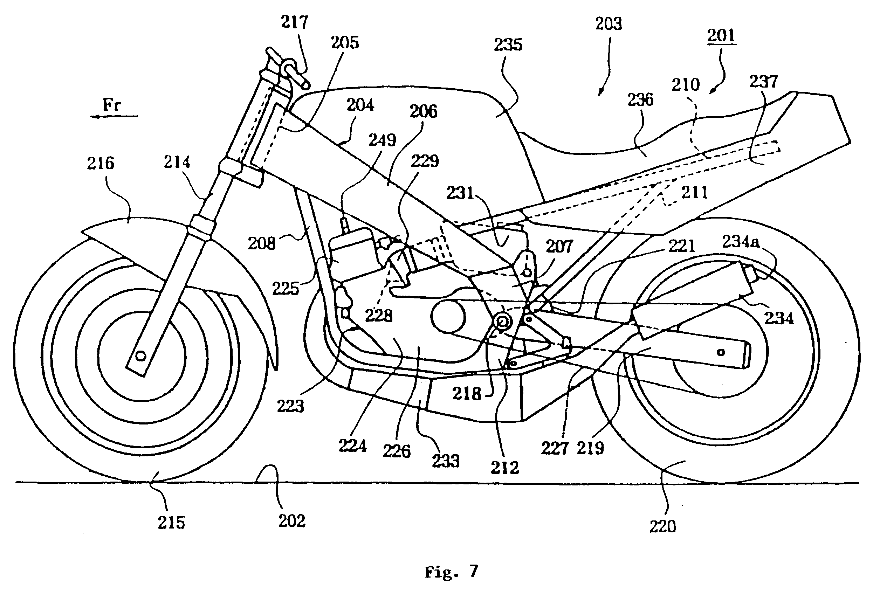

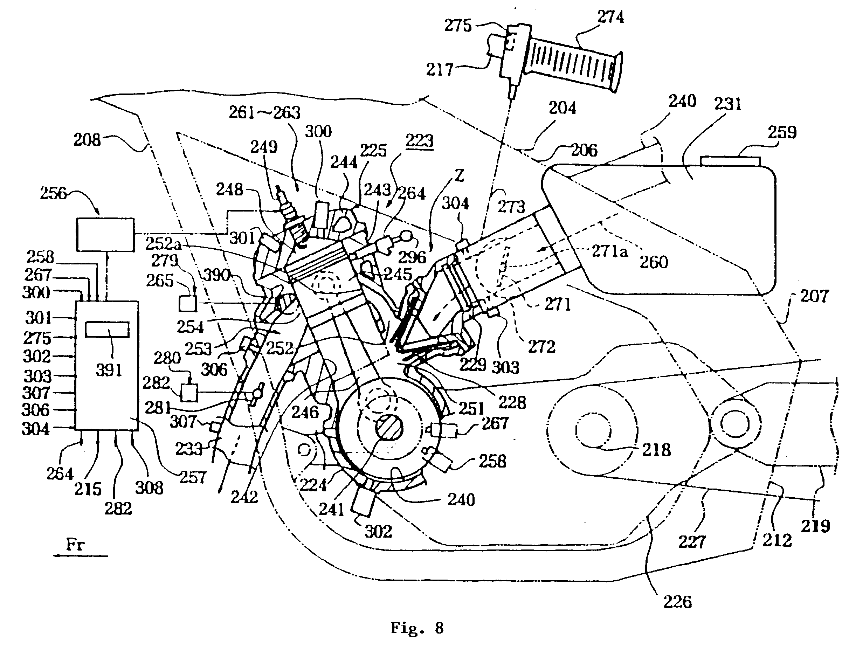

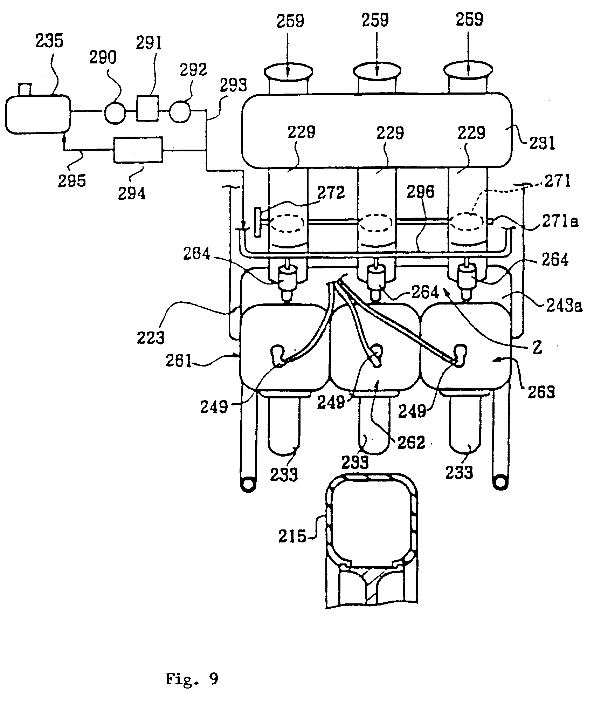

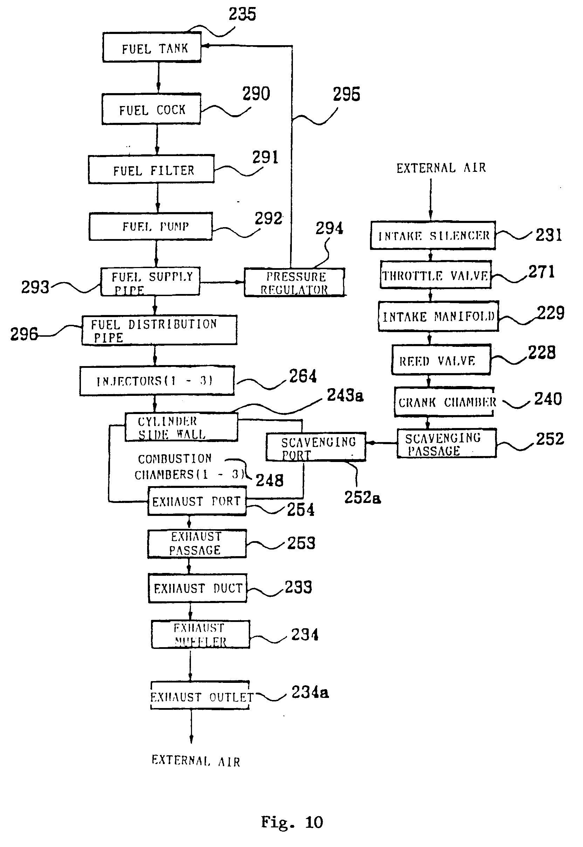

FIGs. 7 through 10 show an embodiment of mounting a fuel injection internal combustion engine on a motorcycle. FIG. 7 shows a schematic configuration of the embodiment of mounting the fuel injection internal combustion engine on a motorcycle. FIG. 8 shows a vertical cross section of the fuel injection internal combustion engine. FIG. 9 is a back view of the fuel injection internal combustion engine. FIG. 10 is a flow chart of fuel and air of cylinder side wall injection.

Those figures show a motorcycle 201 as an example of a riding type vehicle, with the arrow Fr showing the advancing direction. The words right and left used later herein mean the directions as seen in the advancing direction described above. The symbol 202 is the ground on which the motorcycle 201 runs. The motorcycle 201 has a chassis 203 having a chassis frame 204. The chassis frame 204 has at its front end a head pipe 205. From the head pipe 205 extend paired right and left main frames 206 obliquely down backward. From each of the main frames 206 extend seat pilar tubes 207. From the front underside of the main frames 206 extend down tubes 208 with their extension ends connected to the extension ends of the seat pillar tubes 207.

From the rear part of the main frames 206 extend rearwardly and upwardly seat rails 210 supported with paired right and left back stays 211 on the seat pillar tubes 207. The area where the back stays 211 join the seat pillar tubes 207 constitutes a rear arm bracket 212. Freely steerable front forks 214 are supported on the head pipe 205. At the lower ends of the front forks 214 is supported a front wheel 215 with a front fender 216 covering the front wheel 215 from above. The front fender 216 is secured to vertically middle positions on the front forks 214. At the top ends of the front forks 214 are attached handlebars 217.

Rear arms 219 are supported for vertical swinging with a pivot shaft 218 on the rear arm brackets 212. A rear wheel 220 is supported at the swinging ends of the rear arms 219, with dampers 221 interposed between the seat rails 210 and the rear arms 219. A fuel injection internal combustion engine 223 is disposed in a space surrounded with the main frames 206, seat pillar tubes 207, and the down tubes 208, namely within the chassis frame 204. The engine 223 is of a two cycle type comprising a crankcase 224 and cylinders 225 projecting up forward from the crankcase 224, and detachably mounted on the chassis frame 204 by means of tightening means. On the back side of the crankcase 224 is connected a power transmission device 226 on the output side of which is connected the rear wheel 220 through a chain transmission mechanism 227.

To the back side of the cylinders 225 are connected reed valves 228, an intake manifold 229, and an intake silencer 231 in that order. The intake manifold 229 is provided with a throttle valve 271 for controlling the intake amount. A throttle pulley 272 attached to a shaft 271a of the throttle valve 271 is connected through a throttle wire 273 to a throttle grip 274 so that the throttle valve 271 is opened and closed by the operation of the throttle grip 274. The throttle grip 274 is provided on one of the handlebars 217 and has a throttle opening sensor 275.

To the front side of the cylinders 225 is connected one end of an exhaust tube 233 with its other end extending backward near the underside of the down tubes 208 and connected at its rear end to an exhaust muffler 234. Exhaust gas is exhausted from the outlet 234a of the exhaust muffler 234.

A fuel tank 235 is supported on the main frame 206. A seat 236 is supported on the seat rails 210. Side covers 237 are provided for covering the rear part of the chassis 203. By the operation of the engine 223, the motorcycle 201 is driven forward on the road 202 as the power of the engine 223 is transmitted to the rear wheel 220 through the power transmission device 226, the chain transmission mechanism 227, etc.

The engine 223 has the first through third cylinders 261 - 263. A crankshaft 241 is housed in a crank chamber 240 in the crankcase 224 and supported for free rotation about its axis. The cylinder 220 of the engine 223 comprises a cylinder body 243 having a cylinder bore 242 with its axis generally vertical, and a cylinder head attached to the projecting end of the cylinder body 243. In the cylinder bore 242 is inserted a piston 245 for free axial sliding and connected through a connecting rod 246 to the crankshaft 241.

The space surrounded with the cylinder head 224 and the piston 245 in the cylinder bore 242 becomes the combustion chamber 248 when the piston 245 approaches the cylinder head 224 to a certain extent. The cylinder head 244 is provided with a spark plug 249 with its discharging portion facing the combustion chamber 248. In the back upper area of the crankcase 224 is formed an intake port 251 connected to a reed valve 228. The cylinder body 243 around the cylinder bore 242 is provided with a scavenging passage 252 making connection between the crank chamber 240 and the combustion chamber 248. Part of the scavenging passage 252 which is open to the combustion chamber 248 is a scavenging port 252a. An exhaust port 254 is formed in the front part of the cylinder body 243 so as to make connection between the combustion chamber 248 and an exhaust passage 253 in the upstream end which is the front end of the exhaust tube 233.

The engine 223 is provided with plural (three) injectors 264 corresponding to the first through third cylinders 261 - 263. The injectors 264 are detachably attached to the cylinder side walls 243a of the cylinder bodies 243 to inject fuel supplied from the fuel tank 235 from the cylinder side walls 243a into the combustion chambers 248. Since the structure, mounting position, injection direction, and injection timing of the injectors 264 are the same with those of the previous embodiment, descriptions on them are omitted.

A fuel cock 290 is provided under the fuel tank 235. To the fuel cock 290 are connected a fuel filter 291, a fuel supply pump 292, and a fuel supply pipe 293 in that order. Fuel is supplied from the fuel supply pipe 293 through a fuel distribution pipe 296 to the injectors 264. The fuel distribution pipe 293 is provided with a pressure regulator 294 for regulating the pressure of fuel supplied to the injectors 264. Surplus fuel is returned through the pressure regulator 294, and a return fuel passage 295. A space Z behind the cylinder bodies 243, above the intake manifold 229, and below the fuel tank 235 is utilized to lay out the fuel distribution pipe 296 and the injector 264 compactly while avoiding interference with other components and protecting the fuel distribution pipe 296.

An ignition plug 249 is electrically connected to an electronic ignition circuit 256 connected to an electronic engine control device 257. A crank angle sensor 258 is also provided for detecting the rotation angle of the crankshaft 241 and also connected to the electronic engine control device 257.

During operation of the engine 223, when the piston 245 moves from the bottom dead center on the crankshaft 241 side (shown with phantom lines in FIG. 8) toward the combustion chamber 248, the piston 245 covers in succession the scavenging port 252a and the exhaust port 254 in that order. When the piston 245 moves toward the combustion chamber 248 as described above, the pressure in the crank chamber 240 becomes negative. Then, the external air 260 is drawn through the intake silencer 231 as an intake air 260.

Next, the intake air 260 flows through the intake manifold 229 and the reed valve 228 and taken into the crank chamber 240. This process is the "intake stroke".

When the piston 245 moves further toward the combustion chamber 248 after the scavenging port 252a and the exhaust port 254 are covered, mixture formed with fuel already injected with the injector 264 into the combustion chamber 248 and/or fuel injected during this process is compressed. This process is the "compression stroke".

At a required crank angle, namely a required ignition timing, detected with the crank angle sensor 258 immediately before the piston 245 reaches the top dead center, the discharging portion of the ignition plug 249 discharges according to the output signal from the ignition circuit 256 controlled with the engine control device 257. Then, the mixture is ignited and burned, and the burned gas expands. As a result, the piston 245 after passing the top dead center is pushed back toward the crank chamber 240. This process is the "combustion stroke".

As the piston 245 moves toward the crank chamber 240, the air taken into the crank chamber 240 is precompressed. At this time, the reed valve 228 is closed by the pressure in the crank chamber 240.

In the middle of the movement of the piston 245 toward the crank chamber 240, first the exhaust port 254 is uncovered. Then, burned product of the mixture or exhaust gas is exhausted from the combustion chamber 248 through the exhaust port 254. This process is the "exhaust stroke". The exhaust gas is exhausted outside through the exhaust passage 253 in the exhaust tube 233.

As the piston 245 moves toward the crank chamber 240, the exhaust port 254 is opened and then the scavenging port 252a is opened. Then the air pre-compressed in the crank chamber 240 flows through the scavenging passage 252 into the combustion chamber 248 and pushes out part of burned gas remaining in the combustion chamber 248 to the scavenging port 254 and at the same time the combustion chamber 248 is filled with air. This process is the "scavenging stroke". The "scavenging stroke" continues as the piston 245 returns to the bottom dead center, moves up again, and immediately before it covers the exhaust port 252a. Fuel is injected from the injector 264 during the period from the middle of the "scavenging stroke" to the beginning of the "compression stroke" when the piston 245 covers the injector 264.

From the state described above, the piston 245 moves again toward the combustion chamber 248 and the processes are repeated to rotate the crankshaft 241. Through the crankshaft 241 the engine 223 outputs power which is transmitted through the power transmission device 226 and the chain transmission mechanism 227 to the rear wheel 220.

An exhaust timing adjustment device 279 is provided for improving the engine performance by adjusting the exhaust timing when exhaust gas is exhausted from the combustion chamber 248 to the exhaust port 254. The exhaust timing adjustment device 279 has an exhaust timing adjustment valve 390 which opens and closes the upper opening of the exhaust port 254 so that the edge of the upper opening of the exhaust port 254 is variable. The exhaust timing adjustment valve 390 is actuated with an actuator 265 such as a servomotor, etc. which is connected to the engine control device 257.

An engine speed sensor 267 for detecting the revolution of the engine 223 or the crankshaft 241 is connected to the engine control device 257.

When the engine 223 speed is determined by the detection signal of the engine speed sensor 267 to be in the high speed range, the exhaust timing adjustment valve 390 is opened by the operation of the actuator 265 controlled with the engine control device 257, and the upper opening edge of the exhaust port 254 is positioned upward. Thus the exhaust timing is advanced to improve the engine performance in the high speed range.

When the engine 223 speed is determined to be in the middle or low speed range on the other hand, the actuator 265 closes the exhaust timing adjustment valve 390 so that the upper opening edge of the exhaust port 254 is positioned downward. Thus the exhaust timing is delayed to improve the engine performance in the middle or low speed range. While the exhaust timing is delayed at low engine speed, the injection timing may be advanced accordingly and more secure pre-mixture combustion is possible. That is to say, when the injection start timing is delayed at low speeds, injected fuel flow striking the piston head is not spread widely. Therefore, advancing the injection start timing makes it possible to cause injected fuel to strike a wide area of the piston head and improve heat exchange with the piston 245.

The engine 223 is provided with an exhaust valve opening adjustment device 280 with an exhaust valve 281 for adjusting the opening of the exhaust passage 253 and restricting the flow rate of the exhaust gas flowing through the exhaust passage 253 at low loads or low speeds. The exhaust valve 281 is actuated with an actuator 282 such as a servomotor connected to a control device 391.

The engine 223 is provided with a combustion chamber pressure sensor 300 and a knock sensor 301. The combustion chamber pressure sensor 300 delays the ignition timing when the combustion chamber pressure exceeds a predetermined value. When knocking occurs, the knocking sensor 301 detects vibration and causes to delay the ignition timing and prevents knocking, and when the knocking disappears the ignition timing is returned to the original timing.

The engine 223 is also provided with a crank chamber pressure sensor 302, an intake pipe pressure sensor 303, intake pipe temperature sensor 304, an exhaust pipe pressure sensor 306, and an exhaust pipe temperature sensor 307. According to information from those sensors, the engine control device 257 controls the ignition timing, injection timing, injection period, and an oil supply device 308.

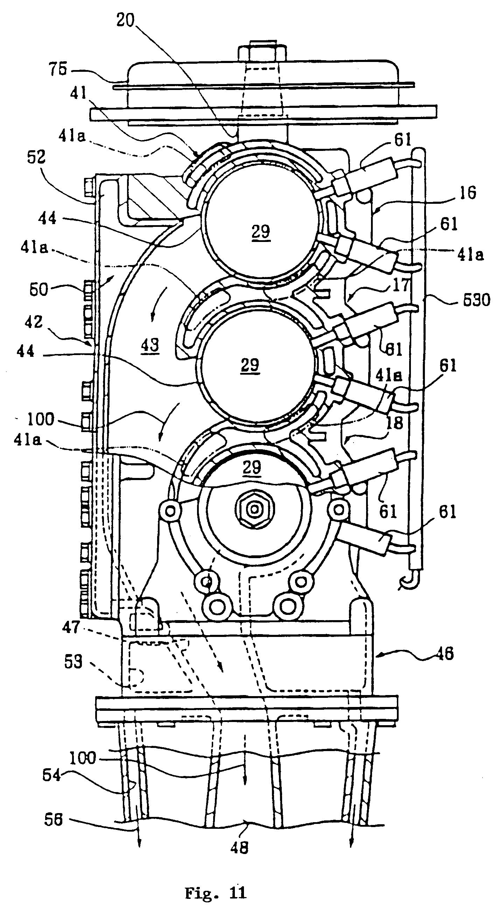

FIG. 11 shows another embodiment of the fuel injection internal combustion engine in an outboard motor in cross section at the same position as that in FIG. 4. In this embodiment, paired injectors 61 opposing each other are attached detachably to the cylinder side wall 22a of each of the first, second and third cylinders 16 - 18. While paired injectors 61 are attached to each cylinder 16, 17 or 18, the number of injectors 61 on each cylinder is not limited to two but may be more than two, or at least one at specified position.

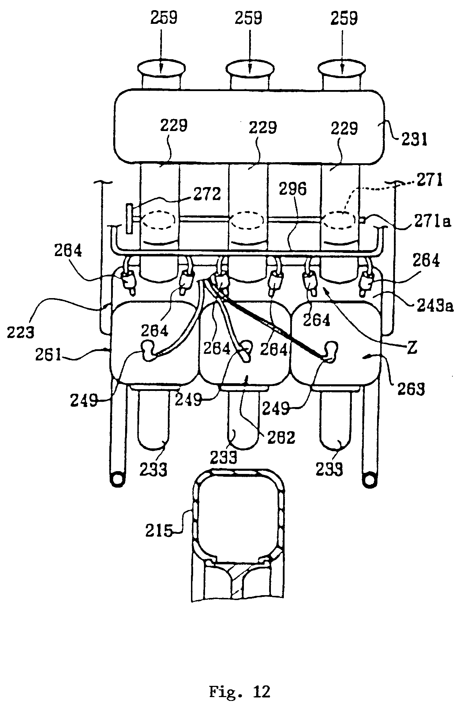

FIG. 12 shows another embodiment of the fuel injection internal combustion engine in a motorcycle in a back view at the same position as that in FIG. 9. In this embodiment, paired injectors 264 opposing each other are attached detachably to the cylinder side wall 243a of each of first, second and third cylinders 261 - 263. In this embodiment too, while paired injectors 264 are attached to each cylinder 261, 262, or 263, the number of injectors 264 on each cylinder is not limited to two but may be more than two, or at least one at specified position.

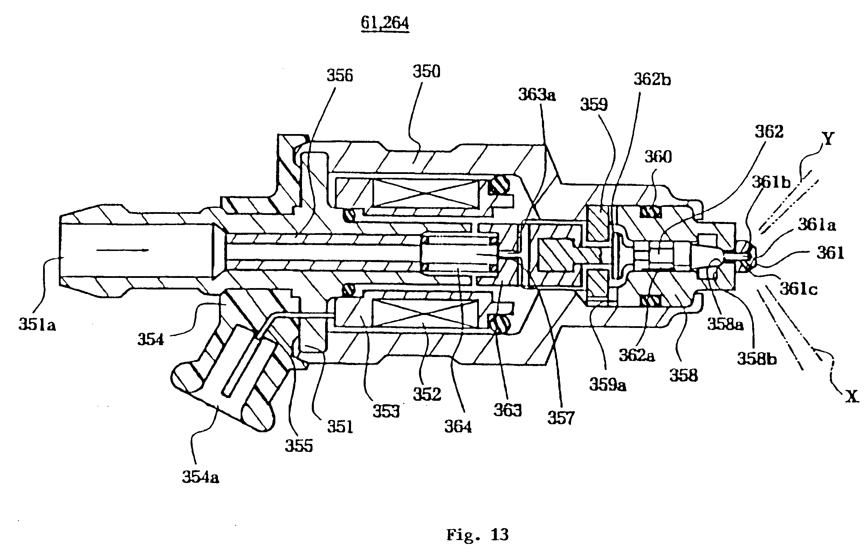

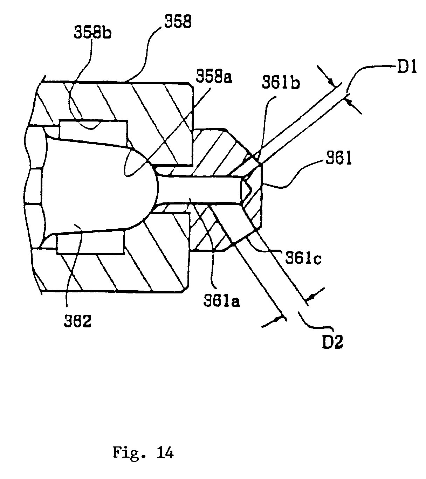

Next, the structure of the injector for use in embodiments of FIGs. 1 - 12 will be described. FIG. 13 is a cross-sectional view of the injector. FIG. 14 is a cross-sectional view of the front end of the injector.

The injector 61, 264 has an injector housing 350. A cap body 351 is fit on the rear end of the injector housing 350. A core 353 with a coil 352 is disposed in the injector housing 350. The cap body 351 is covered with a resin-made cap 354. A connecter 354a of the cap 354 is provided with a lead wire 355 connected to the core 353. The lead wire 355 is connected through the connector 354a to a drive power source side. A pipe 356 is inserted into the cap body 351. Fuel supplied from a fuel inlet 351a of the cap body 351 is led through the pipe 356 into the fuel chamber 357 in the injector housing 350.

A needle housing 358 is fit in the front end of the injector housing 350 with a needle stopper 359 interposed in between, and sealed with a seal member 360. A nozzle 361 is fit in the front end of the needle housing 358 and formed with an injection passage 361a. An upward directed injection hole 361b and a downward directed injection hole 361c are formed and connected to the injection passage 361a. The diameter D1 of the upward directed injection hole 361b is made smaller than the diameter D2 of the downward directed injection hole 361c so that the fuel injection amount from the downward directed injection hole 361c is greater than that from the upward directed injection hole 361b.

A needle 362 is movably disposed in the needle housing 358. A movable piece 363 is fixed to the needle 362. The needle 362 is formed with a fuel passage by cutting. The needle stopper 359 is formed with a fuel passage 359a by cutting. The movable piece 363 is also formed with a fuel passage 363. A compression spring 364 is interposed between the cap body 351 and the movable piece 363 to force the needle 362 through the movable piece 363 in the direction to close a valve seat 358a of the needle housing 358 so that an injection passage 361a is closed and fuel cannot be injected. When a coil 352 on a core 353 is energized, the movable piece 363 is attracted against the compression spring force by electromagnetic force caused with the coil 352 to open the valve seat and the injection passage 361a, and inject fuel. At this time, a stopper flange 362b formed on the needle 362 comes in contact with the needle stopper 359 to restrict the position of the needle 362.

Since the pressure on the injector 61, 264 is adjusted with an adjustment valve at 600 - 650 kilopascal, when the needle 362 presses the valve seat 358a, the fuel pressure in the fuel storage 358b in the needle housing 358 is also 600 - 650 kilopascal. The farther is the needle 362 from the valve seat 358a, the greater becomes the flow velocity through the injector 61, 264, and the pressure in the fuel storage 358b lowers. Since the fuel pressure further lowers as the fuel flows from the fuel storage 358b through the space between the needle 362 and the valve seat 358a, the fuel pressure in the injection passage 361a is about a half of that in the fuel storage 358b.

Fuel is injected to the combustion chamber 29, 248 at the flow velocity based on the differential pressure between the injection passage 361a and the combustion chamber 29, 248. The pressure losses in various parts and pressure adjustment valve are set so that the flow velocity at this time is 10 - 30 m/s, preferably about 20 m/s.

The fuel pressure P2 in the injection passage 361a is the pressure in the upstream part of the injection holes 361b, 361c when fuel is injected from the injector 61, 264 into the combustion chamber 29 is set at 300 kPa - 1000 kPa when the needle 362 is at the maximum opening. With that pressure P2, it is possible to make the injection speed 10 m/s - 30 m/s.

That is to say, with the differential pressure between the pressure P2 in the injection passage 361a and the internal pressure in the combustion chamber 29, 248 and the flow velocity caused by the pressure P2 of 300 kPa - 1000 kPa, fuel is injected into the combustion chamber 29, 248. Pressure drop in various parts and the pressure regulator valve at this time are set to produce the flow velocity of 10 m/s - 30 m/s, preferably about 20 m/s.

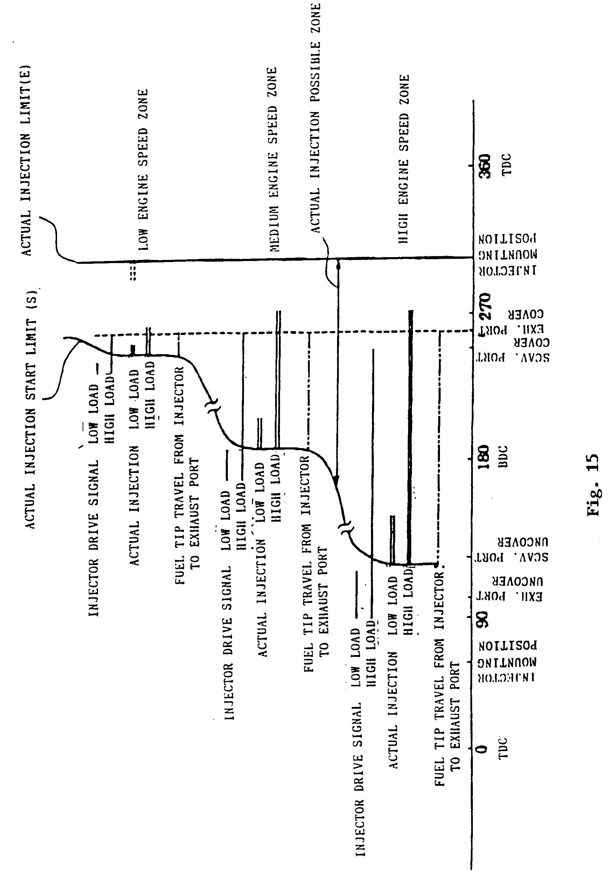

Next, the fuel injection timing of the injector will be described. FIG. 15 is a fuel injection timing chart.

In this fuel injection timing chart, the horizontal axis indicates the crank angles corresponding to the opening and closing of the exhaust port, opening and closing of the scavenging port, and the injector attachment position. The vertical axis indicates the engine speed as the low, medium, and high engine speed zones.

The injector drive signals are indicated with solid lines, with the upper line showing the signal for the low load while the lower line for the high load. The actual fuel injection from the injector is shown with a double line, with the upper line for the low load and the lower line for the high load. The duration for the injected fuel travelling from the injector to the exhaust port is shown with a dash-and-double-dotted line. There is an actuation delay between the injector drive signal and actual actuation of the injector.

The fuel injection timing of the injector varies with the engine speed zones. The actual injection start limit is shown with the curve S and the actual injection limit is shown with the straight line E. The actual available injection range is set with the actual injection start limit curve S and the actual injection limit line E.

In the figure, the length of the dash-and-double-dotted line represents the duration (in crank angle) for the injected fuel travelling from the injector across the combustion chamber to the exhaust port in each of the engine speed zones. Blow-by is prevented by starting injection at a time before the exhaust port closure by the fuel travel time. Such a travel duration is shown with the dash-and-double-dotted line in the figure. The actual injection start limit curve S is produced by connecting the injection start timing capable of preventing the blow-by. When the piston reaches the injector mounting position, the injector is covered with the piston. That timing is the actual injection limit E after which fuel, even if injected, cannot reach the combustion chamber. By the way, the lower the injection speed, the longer becomes the travel time. The nearer is the piston to the exhaust port, the shorter becomes the travel time. When the travel time is the same, concerning the travel period with respect to the crank angle, the lower the engine speed, relatively the shorter the travel period. The longer the travel time, the longer becomes the period from the actual injection start limit to the actual injection limit, and the amount of fuel which can be injected for that period can be increased accordingly. In this embodiment, the injection speed is set to 10 - 30 m/s so that sufficient amount of fuel may be supplied even at high loads.

This embodiment is arranged so that the actual fuel injection is started at the actual injection start limit S and the actual fuel injection is stopped when the required fuel injection amount is reached for all the load range and all the engine speed zones. Therefore, the injection is carried out prior to the ignition made in the vicinity of the top dead center TDC and more uniform mixture is formed. By the way, since the required fuel injection amount increases at high loads, it is arranged that the injection continues after the exhaust port is covered. It may also be arranged that at low loads and low speeds or at the starting time, the actual injection start time is delayed and that the actual injection is finished by the time of the actual injection limit E. The more the actual injection start time is delayed, the more amount of thick mixture which has not been diffused completely remains around the ignition plug. Even with the pre-mixture combustion in which mixture thoroughly mixed by the heat exchange with the piston head is present in the combustion chamber at the time of ignition, almost stratified combustion is possible and stability at low speeds and ease of starting are improved. Such a situation is shown with a double broken line in the figure.

As described above, the injector is arranged as follows: At high speeds, injection is started after the exhaust port is uncovered by the descending piston, and stopped after the ascending piston moves for a specified crank angle after the exhaust port is covered with the piston. At low speeds, the injection is started after the piston starts to ascend and before the exhaust port is covered, and stopped after the ascending piston moves for a specified crank angle after the exhaust port is covered with the piston. Thus, required amount of fuel at high and low speeds is injected with a small number of injectors. The specified crank angle is set at an angle after the exhaust port is covered with the piston and before the injector is completely covered or until the injector is completely covered. Thus, the specified crank angle is made a reference simply and securely.

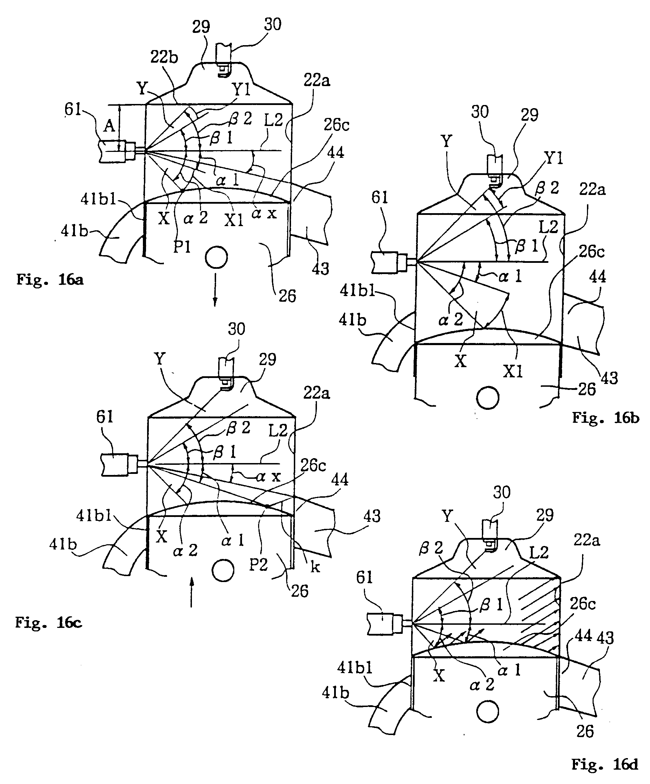

Next, the fuel injection with the embodiment injector shown in FIGs. 1 through 6 will be described in reference to FIGs. 16 through 18. The injection with the embodiment injector shown in FIGs. 7 through 10 is similar to the injection with the injector shown in FIGs. 1 through 6.

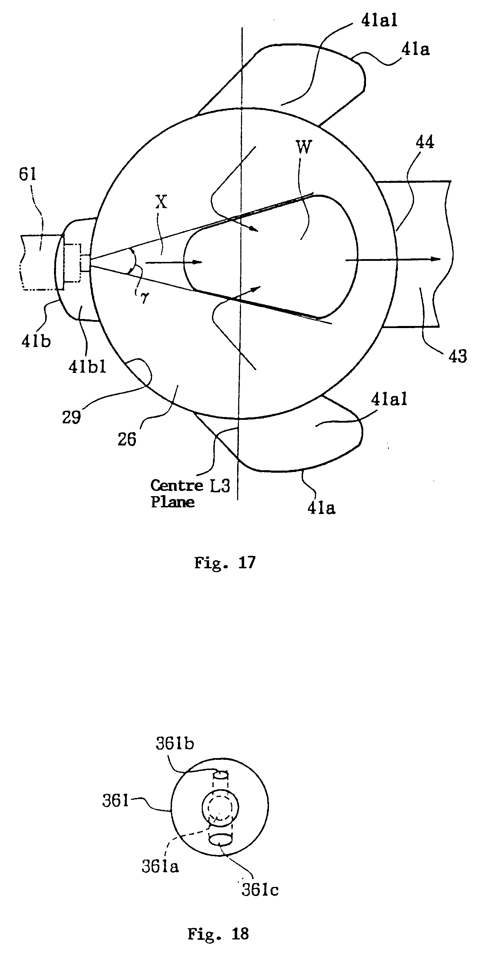

FIG. 16 shows a schematic cross section of fuel injection with an injector. FIG. 17 is a schematic plan view of the fuel injection with the injector. FIG. 18 shows the position and size of the injection holes of the injector.

The mounting conditions of the injector 61 are shown with the embodiment shown in FIGs. 1 through 6. The structure of the injector 61 is shown in FIGs. 13 and 14, but not limited to it.

In FIG. 16 the angles of the downward direction injection flow X of th injector 61 are indicated with α1 and α2 relative to the horizontal plane L2. The plane L2 is actually vertical in the embodiment shown in FIGs. 1 through 6 because the cylinder bore 25 of the cylinder body 22 extends in the horizontal direction. On the other hand, the plane L2 is actually horizontal in the embodiment shown in FIGs. 6 through 8 because the cylinder bore of the cylinder body 243 extends in the vertical direction. The angles α1 and α2 are set greater than the angle αx between the horizontal plane L2 and the line stretched between the injection hole of the injector 61 and the upper edge of the exhaust port.

The angles of the upward direction injection flow Y are indicated with β1 and β2 relative to the horizontal plane L2. The front end surface of the downward direction injection flow X is indicated as X1 and the front end surface of the upward directed injection flow Y is indicated as Y1.

In the state shown in FIG. 16a, fuel injection from the injector 61 is started at a high speed while the piston 26 is descending from the top dead center toward the bottom dead center.

The front end surface X1 of the injection flow X is directed to the descending piston head 26c. In the state shown in FIG. 16b, the piston after reaching the bottom dead center has changed its moving direction and is ascending when the front end surface X1 reaches and strikes the piston head 26c at the point P11. After that, injection flow of angles smaller than α2 reaches and strikes the piston head 26c and changes its direction in succession.

In the state shown in FIG. 16c, part of the injection flow X at the uppermost boundary angle α1 strikes the piston head 26c, while the piston 26 is ascending toward the top dead center. The travel distance of part of the injection flow X at the uppermost boundary angle α1 from the point P21 to the cylinder side wall 22a in the reflecting direction is k. In the state shown in FIG. 14d, the exhaust port 44 is covered before the earliest of part of the injection flow which has reached and struck the piston head 26c reaches the cylinder side wall 22a or the exhaust port 44.

The injection start timing and the fuel injection angles α1 and α2 are set according to the piston speed (crank radius, engine speed), the distance A from the cylinder top end 22b to the injector mounting position, and the injection flow velocity, so that the exhaust port 44 is covered with the piston 26 whenever the injection flow X reaches the cylinder side wall 22a on the opposite side.

When the piston 26 is descending at high speeds, the fuel injection is started while the exhaust port 44 is still open. The lower becomes the speed, the more delayed is the fuel injection start. Therefore, no blow-by of the front end of the injection flow X into the exhaust port 44 occurs.

The slower is made the injection flow velocity, the earlier may be made the injection start. In this embodiment, the velocity of the injection flow X is set to 10 m/s - 30 m/s.

Either in the case the injection flow is directed to the exhaust port 44 or in the case it is made to strike the piston head 26c, since the exhaust port 44 is covered with the piston 26 before the injection flow reaches the exhaust port 44, no fuel blow-by occurs through the exhaust port 44.

Furthermore, if the injection start timing is delayed, injection flow velocity is reduced, or the cylinder bore is increased, the fuel injection angle $\alpha 1$ may be further reduced. For instance, the fuel injection angle $\alpha 1$ may be set to 0° namely horizontal.

By directing the upward injection flow Y to the spark plug 30 and delaying the fuel injection start timing at low speeds, thick mixture produced around the piston 26 and at the piston head 26c may be ignited before they are diffused. There is a thin mixture between the piston circumference and the piston head. Thus, a slow combustion is possible in which fire surface advances slowly like a stratified combustion. As a result, stability is improved. By not directing to the piston 26 circumference but upward only, thick mixture may be produced sufficiently in both upper and lower parts of the combustion chamber 29. As a result, pre-mixing is carried out securely through the diffusion of mixture by remaining swirl after scavenging at medium and high speeds.

The injection flow X after striking the piston 26 changes its direction toward the upper part of the cylinder, and a part of fuel also changes its direction to the upper space of the cylinder by an injection flow guide 26d.

In FIG. 16b, F3 is the exhaust flow. The main scavenging flows F1 come from the main scavenging ports 41a1 on both sides, turn around and go to the exhaust port 44. The sub-scavenging flow F2 comes from the sub-scavenging port 41b1. The injection flows X and Y, even if they are disturbed by the main scavenging flow F1 and the sub-scavenging flow F2, are not made to reach the exhaust port 44 earlier. As a result, blow-by is prevented. A tandem flow F4 shown in FIGs. 16c and 16d remains in the combustion chamber 29 and contributes to form uniform mixture.

As shown in FIG. 17, the injector 61 is disposed on the half of the cylinder side wall 22a opposite the exhaust port 44. That is to say, the injector 61 is disposed on the same side as the sub-scavenging port 41b1 of the center plane L3.

As shown in FIG. 18 the upward directed injection hole 361b and the downward directed injection hole 361c of each injector 61 are located up and down in symmetric positions to an injection passage 361a.

The upward directed injection hole 361b and the downward directed injection hole 361c have circular cross sections, with the downward directed injection hole 361c having a larger diameter than that of the upward directed injection hole 361b. As a result, fuel amount of the injection flow X directed to the piston head 26c is greater than that of the injection flow Y directed upward of the injector 61. Therefore, combustion heat stagnates on the piston head 26c and makes the piston head 26c a hot spot where vaporization of fuel of the injection flow directed to the piston head 26c is more securely accelerated.

The downward directed injection hole 361c has a circular cross section. In the plan view of FIG. 17 the angle $\gamma$ of the injection flow X is set by $\alpha 2 - \alpha 1$. The area where the injection flow X strikes the piston head 26c is indicated with W. All the injection flow X directed to the piston head 26c strikes the piston head 26c and vaporization of fuel of the injection flow X directed to the piston head 26c is more securely accelerated. The front end R1 and rear end R2 of the striking area W move toward the injector 61 as the piston 26 ascends. By the way, injection holes 361b and 361c may not have a circular cross section.

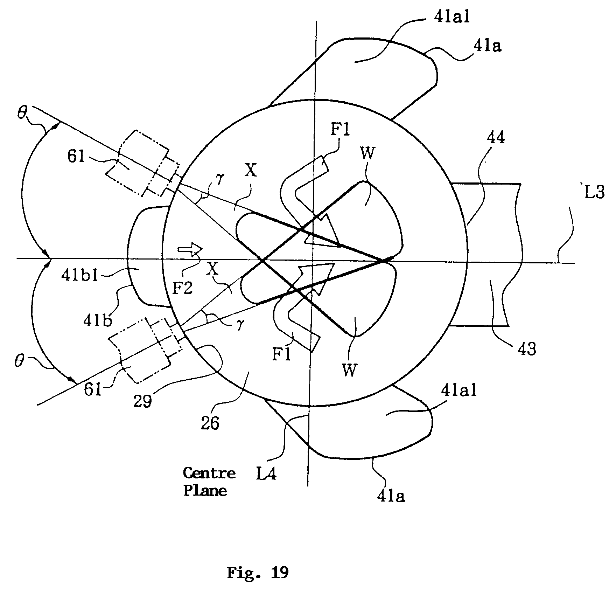

FIG. 19 shows a schematic cross section of the injection from the injector of another embodiment. In this embodiment:

As shown in FIG. 19 paired injectors 61 are disposed in a half of the cylinder side wall 22a opposite the exhaust port 44. That is to say, the injectors 61 are disposed on the sub-scavenging port 41b1 side of the center plane L4 vertically intersecting the plane L3 connecting the sub-scavenging port 41b1 and the exhaust port 44 to each other. The paired injectors 61 are respectively disposed at an angle $\theta$ relative to the plane L3 connecting the sub-scavenging port 41b1 and the exhaust port 44 to each other.

As shown in FIG. 18 the upward direction injection hole 361c and the downward injection hole 361c of each injector 61 are located up and down in symmetrical positions to the injector passage 361a.

Two downward directed injection holes 361c are formed. The injection hole 361b and the downward directed injection hole 361c have a circular cross section. The downward directed injection hole 361c has a greater cross section than the injection hole 361b. As a result, fuel amount of the injection flow X directed to the piston head 26c is greater than that of the injection flow Y directed upward of the injector 61, and heat stagnates on the piston head 26c and makes it a hot spot where vaporization of fuel directed to the piston head 26c is more securely accelerated.

The downward directed injection hole 361c has a circular cross section. In the plan view of FIG. 16, the angle $\gamma$ of the injection flow X is set by $[\alpha 2 - \alpha 1]$. The area where the injection flow X strikes the piston head 26c is indicated with W. All the injection flow X directed to the piston head 26c strikes the piston head 26c and vaporization of fuel of the injection flow X directed to the piston head 26c is more securely accelerated. The front end R1 and rear end R2 of the striking area W move toward the injector 61 as the piston 26 ascends. By the way, injection holes 361b and 361c may not have a circular cross section.

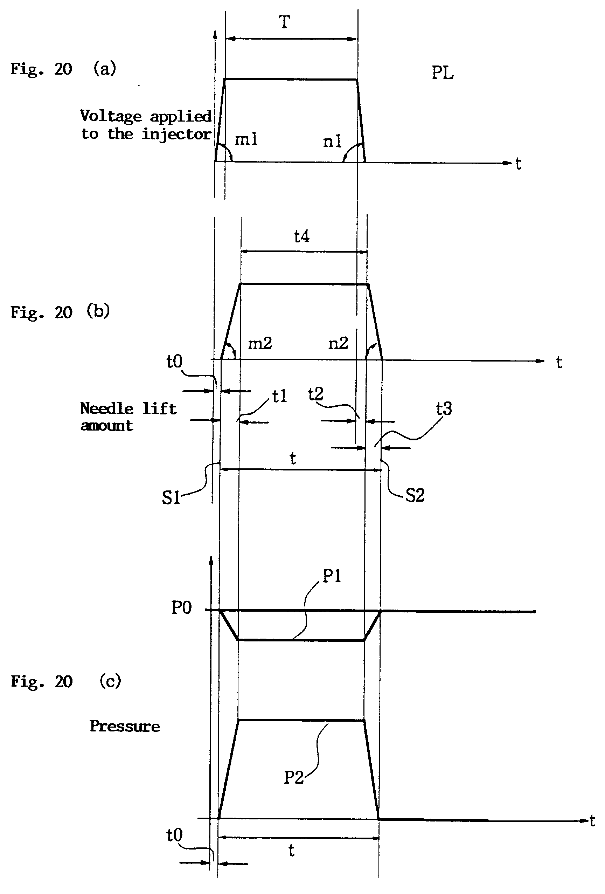

Next, the injection timing of the injector will be described. A timing charge of FIG. 20 shows voltage applied to the injector, needle lift amount and pressure.

FIG. 20a shows the voltage applied to the injector. FIG. 20b shows the needle lift amount of the injector. FIG. 20c shows the pressure in the injector. As shown in FIG. 20a, a voltage is applied to a coil 352 of the injector 61, and a pulse PL having a maximum application voltage period of time T is output. The pulse PL includes the rise time m1 and the fall time n1 caused by the inductance of the coil 352. However, the time T does not include the rise time m1 and fall time n1.

Referring to FIG. 20b, the needle 362 of the injector 61 is opened and closed according to the pulse PL. Fuel is injected during the wide open time t4 of the needle. During the time t4, the needle 362 is at the maximum opening with the pressure P2 at 300 kPa - 1000 kPa, and the injection velocity at 10 m/s - 30 m/s.

The actual time t is from the rise m2 to the fall n2 of the needle lift. The start timing of the actual injection is indicated with S1 and the end timing is indicated with S2. There is a certain response delay t0 from the voltage application to the actual start of lift of the needle 362. The response delay is mainly due to inertia. The needle 362 starts opening motion at the actual injection start timing S1 and, after a certain time t1 has elapsed, becomes wide open. After a certain time t2 or a reponse delay from the stop of voltage application, the needle 362 starts closing motion. The response delay is mainly due to inertia. After a certain time t3 form the start of the closing motion of the needle 362, the actual injection ends.

In this embodiment, the rise m2 of the needle lift is set greater than the rise m1 of the pulse PL and likewise the fall n2 of the needle lift is set greater than the fall n1 of the pulse T. Displacements of the rise m2 and fall n2 of the needle lift are slowed down by the elastic resistance of the compression spring 364 in the injector 61.

By the opening and closing operation of the needle, pressure variation occurs in the injector 61. Referring to FIG. 17c, the pressure of the pressure regulation valve is PO. When the needle 362 presses the valve seat 358a, fuel pressure P1 in the fuel storage 358b in the needle housing 358 is 600 kPa. The difference between the regulation pressure PO and the fuel pressure P1 is the pressure drop in the injector 61. The fuel pressure P2 in the injection passage 361a is set to become about a half the regulation pressure PO when the needle 362 is wide open. The fuel pressure P2 in the injection passage 361a is the pressure in the upstream part of the injection holes 361b, 361c when fuel is injected from the injector 61, 264 into the combustion chamber 29. When the needle 362 is wide open, the pressure P2 is 300 kPa - 1000 kPa. The difference between the fuel pressure P1 and the pressure P2 at the maximum opening position is the pressure drop between the needle 362 and the valve seat 358a.

With the differential pressure between the pressure P2 in the injection passage 361a and the pressure in the combustion chamber 29, 248, fuel is injected into the combustion chamber 29, 248 at the flow velocity of 10 m/s - 30 m/s, preferably 22 m/s or less, for example 20 m/s. Pressure drop or regulation pressure in various parts is set to produce above conditions.

FIG. 18 shows a cross section of another embodiment of the injector. In this embodiment, the needle 362 is disposed in the needle housing 358. A fuel passage 362d is formed through the axial center of the needle 362. At the tip end 362e of the needle 362 plural number of fuel supply holes 362f are formed to connect the fuel passage 362d to the fuel storage 358b. A nozzle portion 358c is formed integrally with the needle housing 358. An upward directed injection hole 361b and downward directed injection hole 361c are formed to be connected to the injection passage 361a formed in the nozzle portion 358c. Thus, the injector 61 performs smooth fuel injection with a simple structure. By the way, the angle μ between both injection holes 361b and 361c on both ends in the longitudinal direction of the cylinder is 45° or greater so that injection is made over a wide range.

According to an embodiment, the injector 61 is disposed in a half zone in the circumferential direction of the cylinder wall 22a opposite the exhaust port 44 and nearer to the cylinder head 23 than to the exhaust port 44 in the longitudinal direction of the cylinder. At high speeds, the injector starts injection after the exhaust port is uncovered as the piston descends, and stops when the piston has moved for a specified crank angle after the exhaust port is covered with the piston as the piston ascends. At low speeds, the injector starts injection at a time point which is after the piston starts ascending from the bottom dead center and before the exhaust port is covered, and stops when the piston has moved for a specified crank angle after the exhaust port is covered with the piston as the piston further ascends. Thus, required amount of fuel may be supplied with a small number of injectors at both high and low speeds.

Since the fuel injection is stopped at a crank angle which is between the crank angle at which the exhaust port is covered with the piston and the crank angle at which the injector is completely covered, or at the specific crank angle when the piston completely covers the injector, such an angle may be used as a simple and secure reference for stopping the injection.

As described above, by setting the injection velocity from the injector into the combustion chamber at 10 m/s - 30 m/s, sufficient period of time after is secured for fuel to reach the piston top, and vaporization of fuel is accelerated. Furthermore, fuel is preventing from finding its way into the exhaust port even if fuel is injected prematurely. Furthermore, since the injection flow speed directed to the piston head is not so low as the injection flow is disturbed with tandem flow produced in the cylinder by the scavenging flow, heat exchange at the piston head is possible, and vaporization of injected fuel is more accelerated.

In addition, the fuel pressure in the upstream part of the injection hole when fuel is injected from the injector 61 into the combustion chamber 29 is set at 300 kPa - 1000 kPa. With that pressure, it is possible to make the injection speed 10 m/s - 30 m/s with pressure setting using a simple structure.

## Claims

1. Internal combustion engine (10; 223) of a two-stroke cycle type comprising at least one cylinder body (22; 243) a top end (22b) of which being covered by a cylinder head (23; 224), said cylinder body (22; 243) accommodating a slidingly reciprocable piston (26; 245) and at least one fuel injector (61; 264), **characterized in that** said fuel injector (61; 264) is capable to inject fuel with a velocity of 10m/s to 30m/s.

2. Internal combustion engine according to claim 1, **characterized in that** said piston (26; 245) comprises at least one ring groove (26a, 26b) for accommodating at least one piston ring (521, 522) and that said fuel injector (61; 264) is located within a cylinder side wall (22a; 243a) at a first distance A to said top end (22b) of said cylinder body (22; 243) and in that the following inequation is fulfilled: $RS < A < 0.3L$, whereby RS is a second distance between said top end (22b) of said cylinder body (22, 243) and the lower end of said ring groove (26a, 26b) of said piston (26; 245) when it is at the top dead center position and L is a third distance between said top end (22b) of said cylinder body (22; 243) and the top circumference of said piston (26; 245) when it is in the bottom dead center position.

3. Internal combustion engine according to claim 1 or 2, **characterized in that** said injector (61; 264) is connected to first and second fuel pumps (64, 65).

4. Internal combustion engine according to claim 3, **characterized in that** said injector (61; 264) is an electromagnetic injector.

5. Internal combustion engine according to at least one of claims 1 to 4, **characterized by** an engine control device (73; 257) for controlling said injector (61; 264) on the basis of detected engine operating conditions.

6. Internal combustion engine according to claim 5, **characterized in that** said engine operating conditions is one or a combination of a crank angle, a crankcase inside pressure, a cylinder inside pressure, knocking of the engine, intake air temperature, a throttle opening, an intake pressure, a cylinder temperature, an atmospheric pressure, a coolant temperature and an engine speed.

7. Internal combustion engine according to at least one of claims 1 to 6, **characterized in that** said injector (61; 264) comprises an injection passage (361a) directed transversely to the cylinder axis and leading to at least one injection hole (361d) having

an opening angle (μ) of at least 45° along the cylinder axis.

8. Internal combustion engine according to one of claims 1 to 7, **characterized in that** said internal combustion engine is a two-stroke cycle internal combustion engine (10; 223) comprising at least one exhaust port (44; 254) and at least one scavenging port (41b1) opposing each other and that a fourth distance ES between said top end (22b) of said cylinder body (22; 243) and said exhaust port (44; 254) fulfils the following inequation:

$$0.35 ES < A < 0.65 ES.$$

9. Internal combustion engine according to claim 8, **characterized in that** said injector (61; 264) is located opposite to said exhaust port (44; 254).

10. Internal combustion engine according to claim 8 or 9, **characterized in that** said engine control device (73; 257) is adapted to control the operation of said injector (61; 264) such that at high engine speeds said injector (61; 264) starts fuel injection after said exhaust port (44; 254) is uncovered as said piston (26; 245) descends, and stops fuel injection when said piston has moved corresponding to a specified crank angle after said exhaust port (44; 254) is covered with said piston (26; 245) when it ascends.

11. Internal combustion engine according to claim 10, **characterized in that** said engine control device (73; 257) is adapted to control the operation of said injector (61; 264) such that at low engine speeds said injector (61; 264) starts fuel injection at a time after said piston (26; 245) starts ascending from its bottom dead center position and before said exhaust port (44; 254) is covered, and stops fuel injection when said piston (26; 245) has moved corresponding to a specified crank angle after said exhaust port (44; 254) is covered by said piston (26; 245) as it further ascends.

12. Internal combustion engine according to claim 10 or 11, **characterized in that** said specified crank angle is defined as an angle between the crank angle at which said exhaust port (44; 254) is covered with said piston (26; 245) and the crank angle at which said injector (61; 264) is completely or before it is completely covered.

13. Internal combustion engine according to one of claims 1 to 12, **characterized by** a further injector (61; 264) for said at least one cylinder body (22; 243).

14. Internal combustion engine according to one of claims 1 to 13, **characterized in that** said injector (61; 264) comprises a cap body (351) fitted on the exterior side of an injector housing (350), a core (353) provided with a coil (352) within said housing (350), a needle housing (358) fitted to the interior side of said housing (350), and a nozzle (361) at the interior side of said housing (358) having an injection passage (361a) leading to respective injection holes (361b, 362c).

15. Internal combustion engine according to one of claims 1 to 14, **characterized in that** said injector (61; 264) comprises at least tow injection holes (361b; 361c).

16. Internal combustion engine according to claim 15, **characterized in that** the cross-section of the upper injection hole (361b) is smaller than the cross-section of the lower injection hole (361c).

17. Internal combustion engine according to claim 16, **characterized in that** the angles ($\alpha$1, $\alpha$2) of the injection flow (X) from the lower injection hole (361c) with respect to a plane (L2) transverse to said cylinder axis are larger than an angle ($\alpha$x) between said transverse plane (L2) and a line connecting said injector (61; 264) with the upper edge of said exhaust port (44; 254) adjacent said cylinder head (23; 224).

18. Internal combustion engine according to one of claims 1 to 17, **characterized in that** the top surface of said piston (26; 245) is provided with a recess (26d) for redirecting injected fuel toward the cylinder head (23; 224).

19. Internal combustion engine according to one of claims 1 to 13 or 15 to 18, **characterized in that** said injector (61; 264) comprises a needle (362) located in a needle housing (348), a fuel passage (362d) formed through the axial center of said needle (362), a plurality of fuel supply holes (362f) at a tip end (362e) of said needle (362) for connecting said fuel passage (362d) to a fuel storage (358b), a nozzle portion (358c) formed integrally with said needle housing (358), an injection passage (361a) formed in said nozzle portion (358c) and respective injection holes (361b, 361c) in fluid communication with said injection passage (361a).

Fig. 1

FUEL TANK ~ 63

PRIMARY PUMP ~ 600

— IN HULL(2)

IN OUTBOARD
MOTOR (3)     EXTERNAL AIR(97)

HOSE SIDE CONNECTOR ~ 601

COWLING SIDE CONNECTOR ~ 602          COWLING OPENING ~ 510

1ST FUEL PUMP ~ 64                    INTAKE SILENCER ~ 37

FUEL FILTER ~ 66                      THROTTLE BODY ~ 36

603                    ~ 604   70      INTAKE MANIFOLD ~ 35
NEEDLE VALVE   FLOAT
                                      REED VALVE ~ 34
VAPOR SEPARATOR ~ 67
                                      CRANK CHAMBER ~ 19a
2ND FUEL PUMP ~ 65
                              69      SCAVENGING PASSAGE ~ 41
FUEL DISTRIBUTION PIPE ~ 605
                            PRESSURE
                            REGULATOR

INJECTORS(1 - 3) ~ 61           41a

                CYLINDER
                SIDE WALL        SCAVENGING PORT

           COMBUSTION 29
22a        CHAMBER

                EXHAUST PORT
                            ~ 44

                1ST EXHAUST
                PASSAGE      ~ 43

                2ND EXHAUST
                PASSAGE      ~ 47

                3RD EXHAUST
                PASSAGE      ~ 48

                EXHAUST OUTLET
                            ~ 606

Fig. 2

Fig. 3

(a)

Fig. 4

Fig. 5

Fig. 6

Fig. 7

EP 0 742 354 A1

Fig. 8

Fig. 9

235

FUEL TANK

FUEL COCK — 290    295

FUEL FILTER — 291

FUEL PUMP — 292    294

293 — FUEL SUPPLY PIPE    PRESSURE REGULATOR

296 — FUEL DISTRIBUTION PIPE

INJECTORS(1 - 3) — 264    243a

CYLINDER SIDE WALL

SCAVENGING PORT

COMBUSTION CHAMBERS(1 - 3) 248    252a

EXHAUST PORT — 254

EXHAUST PASSAGE — 253

EXHAUST DUCT — 233

EXHAUST MUFFLER — 234

EXHAUST OUTLET — 234a

EXTERNAL AIR

EXTERNAL AIR

INTAKE SILENCER — 231

THROTTLE VALVE — 271

INTAKE MANIFOLD — 229

REED VALVE — 228

CRANK CHAMBER — 240

SCAVENGING PASSAGE — 252

Fig. 10

25

Fig. 11

Fig. 12

61,264

Fig. 13

Fig. 14

Fig. 15

Fig. 16a

Fig. 16b

Fig. 16c

Fig. 16d

Fig. 17

Fig. 18

Fig. 19

Fig. 20 (a)

Voltage applied to the injector

T

PL

m1    n1

t

Fig. 20 (b)

t4

t0

m2    n2

t

Needle lift amount

t1    t2    t3

t

S1    S2

Fig. 20 (c)

P1

P0

Pressure

P2

t0    t

34

Fig. 21

**European Patent Office**

## EUROPEAN SEARCH REPORT

Application Number

EP 96 10 7610

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>A | GB-A-2 193 252 (ORBITAL)<br>* page 4, line 110 - page 5, line 100; figure 8 *<br>--- | 1<br>2 | F02B61/04<br>F02M69/10 |
| A | US-A-5 271 358 (KATOH)<br>* abstract; figures 1-27 *<br>--- | 1,2,7 | |
| A | DE-A-42 23 758 (STIHL)<br>* column 3, line 1 - column 4, line 33; figure 1 *<br>--- | 3 | |
| A | US-A-5 211 145 (YAMAHA)<br>* the whole document *<br>--- | 1,4,5 | |
| A | MTZ,<br>vol. 13, no. 10, 1 - 31 October 1952,<br>08-40,<br>pages 252-255, XP002011015<br>?: "zweitakt-benzineinspritzung bei gutbrod und goliath"<br>* page 254, line 1 - line 32; figure 6 *<br>----- | 3 | |

**TECHNICAL FIELDS SEARCHED** (Int.Cl.6)

F02B
F02M

The present search report has been drawn up for all claims

| Place of search | Date of completion of the search | Examiner |
|---|---|---|
| THE HAGUE | 19 August 1996 | Wassenaar, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)